# DEMANDE DE BREVET EUROPEEN

(11) **EP 1 469 661 A1**
(43) Date de publication de la demande: **20.10.2004**
(21) Numéro de dépôt: 04008465.9
(22) Date de dépôt: 07.04.2004
(51) Int. Cl.: H04M 3/51, H04M 3/436

(54) **Gestion d'appels téléphoniques dans un centre d'appels virtuel**

(30) Priorité: 14.04.2003 FR 0304599
(71) Demandeur: FRANCE TELECOM, 75015 Paris (FR)
(72) Inventeur: Villey, Jean-Christian, 22560 Pleumeur Bodou (FR); Lejeune, Sabine, 22730 Tregastel (FR)
(74) Mandataire: Vannini, Torquato

(57) **Abrégé**

L'invention concerne un système de télécommunication apte à fournir un service de type centre d'appels téléphoniques, ledit système étant relié à au moins un réseau téléphonique R équipé d'un ou plusieurs commutateurs d'accès 1 au réseau, d'un ou plusieurs commutateurs de transit 2 et d'au moins un point de commande de service PCS. Selon l'invention, le système comprend :
- des équipements téléphoniques (4) non dédiés au service;
- le point de commande de service (3) relié à un ou plusieurs commutateurs dont au moins un est un commutateur de raccordement des équipements téléphoniques du centre d'appels,;
dans lequel les commutateurs de raccordement des équipements du centre d'appels et un ou plusieurs commutateurs de transit reliés à ces commutateurs étant équipés d'une fonction CAS d'accès au service centre d'appel, et sont aptes à déclencher le point de commande à l'arrivée d'un appel à destination d'un équipement du centre d'appels.

## Description

L'invention concerne un système de télécommunication pour la gestion d'appels pour centre d'appels "virtuel".

On entend par centre d'appel "virtuel" un service de téléphonie permettant sur simple appel téléphonique d'atteindre un opérateur qui fait partie d'un ensemble d'opérateurs, dont un certain nombre peuvent travailler en télétravail (typiquement de leur domicile).

Etat de la technique.

Les centres d'appels téléphoniques assurant des services tels que la vente par correspondance, les appels pour informations gratuites ou non (numéro vert, numéro indigo etc) existent depuis très longtemps à ce jour.

Ces centres d'appels comportent un équipement de téléphonie dédié au service "centre d'appel" et des opérateurs répondant aux appels téléphoniques de clients du service. L'équipement comprend un autocommutateur privé gérant tous les appels entrant et sortant du centre et des postes téléphoniques reliés à l'autocommutateur.

Même les systèmes actuels évolués, c'est-à-dire les systèmes qui s'orientent vers des solutions centre d'appels virtuels, nécessitent chez les clients des équipements (entre autre des terminaux) dédiés à ce service.

On peut citer à titre d'exemple le système ETC télécoms qui propose une solution à voix sur IP, mais qui nécessite des postes dédiés pour les opérateurs de centres d'appels.

On comprend bien que devoir équiper des opérateurs travaillant chez eux d'équipements dédiés est une solution lourde et onéreuse car elle nécessite des interventions chez chaque opérateur.

Depuis peu de temps, le service "renseignements" (appel du n°12 en France) a été mis en place avec des opérateurs travaillant à domicile. Il s'agit d'un service non entièrement intégré puisque les appels reçus par les opérateurs sont des renvois pour lesquels l'acheminement de l'appel n'est pas optimisé dans le réseau (on procède à du "Tromboning " c'est-à-dire des déviations ou dérivations).

En outre, le problème de la gestion des appels reçus et émis à partir du poste de l'opérateur se pose dés lors que l'équipement utilisé n'est pas dédié, autrement dit dés lors que l'on cherche à mettre en place un service de centre d'appels virtuel avec les équipements privés de l'opérateur. La mixité d'usage (appels publics/appels privés) du terminal de l'opérateur pose un problème de gestion des appels et de facturation.

Le but de l'invention est d'offrir un service de téléphonie avancé (domaine télécommunications/services) qui permet à un client professionnel de ce service de créer et de gérer des centres d'appels virtuels constitués d'un ensemble d'opérateurs travaillant en télétravail (typiquement à leur domicile).

Le système proposé permet d'offrir ce service sans avoir les inconvénients qui ont été rappelés dans ce qui précède à propos de l'état de la technique existant à ce jour à savoir la nécessité d'utiliser des postes téléphoniques dédiés et la gestion de la coexistence des appels privés et publics (appel de service).

En outre, le système s'appuie sur les infrastructures réseau existantes à savoir un réseau téléphonique commuté ainsi qu'un réseau de télécommunication intelligent existant, avec pratiquement pas d'investissement matériel de la part du client.

L'invention a plus particulièrement pour objet un système de télécommunication apte à fournir un service de type centre d'appels téléphoniques, ledit système étant relié à au moins un réseau téléphonique R équipé d'un ou plusieurs commutateurs d'accès 1 au réseau, d'un ou plusieurs commutateurs de transit 2 et d'au moins un point de commande de service PCS, le système étant principalement caractérisé en ce qu'il comprend :
- des équipements téléphoniques non dédiés au service, constituant des équipements téléphoniques du centre d'appel virtuel, ces équipements étant des terminaux téléphoniques privés, chacun raccordé à un commutateur d'accès au réseau de télécommunication ;
- le point de commande de service relié à un ou plusieurs commutateurs dont au moins un est un commutateur de raccordement des équipements du centre d'appel, ce point de commande comprenant des moyens de gestion de l'état libre ou occupé des terminaux du centre d'appels virtuel et des moyens gestion des appels selon leur type à savoir selon qu'il s'agit d'appels de type service ou de type privé concernant ces équipements;
et en ce que les commutateurs de raccordement des équipements du centre d'appels et un ou plusieurs commutateurs de transit reliés à ces commutateurs sont équipés d'une fonction CAS d'accès au service centre d'appel, aptes à déclencher le point de commande à l'arrivée d'un appel à destination d'un équipement du centre d'appels.

L'invention a également pour objet un point de commande de service pour la gestion des appels dans un centre téléphonique d'appels virtuel relié à au moins un réseau téléphonique équipé d'un ou plusieurs commutateurs d'accès et de transit, principalement caractérisé en ce qu' il est relié à un ou plusieurs commutateurs du réseau téléphonique dont au moins un est un commutateur de raccordement des équipements du centre d'appel, et en ce qu'il comporte des moyens de gestion de l'état libre ou occupé des terminaux du centre d'appel virtuel et des moyens gestion des appels selon leur type à savoir selon qu'il s'agit d'appels de type service ou de type privé concernant ces équipements.

L'invention a aussi pour objet, un procédé de gestion des appels pour un centre téléphonique virtuel dans lequel des opérateurs munis de terminaux téléphoniques sont susceptibles d'être appelés et selon lequel le centre virtuel est relié à au moins un réseau téléphonique R équipé d'un ou plusieurs commutateurs d'accès 1 au réseau et ou de raccordement des équipements, d'un ou plusieurs commutateurs de transit 2 et d'au moins un point de commande de service PCS principalement caractérisé en ce qu'il comprend :
- Pour un appelant, la composition d'un numéro de service prédéfini (NAS) lorsqu'il s'agit d'un appel de service à destination du centre d'appel virtuel ou d'un numéro personnel d'un opérateur de ce centre lorsqu'il s'agit d'un appel privé,
- Pour le réseau, l'acheminement de cet appel vers au moins le commutateur de raccordement d'un opérateur du centre d'appel ou vers le commutateur de raccordement de l'opérateur demandé, ces commutateurs étant munis d'une fonction d'accès au service centre d'appel (CAS),
- Pour le commutateur de raccordement de l'opérateur ou d'accès ou de transit, le déclenchement du point de commande de service sur l'appel qu'il soit privé ou de service,
- Pour le point de commande de service, la gestion de l'état libre ou occupé des terminaux du centre d'appel virtuel, la gestion de l'appel téléphonique reçu en fonction de règles prédéfinies selon son type à savoir selon qu'il s'agit d'un appel de type service ou de type privé.

D'autres particularités et avantages de l'invention apparaîtront clairement à la lecture de la description faite ci-après et qui est données à titre d'exemple non limitatif et en regard des dessins annexés sur lesquels, :
- La figure 1, représente un schéma d'un réseau dans lequel le système de télécommunication selon l'invention est intégré ;
- La figure 2, représente un schéma des échanges entre commutateur d'accès au service (CAS) au niveau accès (1) ou transit (2) et l'organe point de commande du service (PCS) déclenché sur le principe d'analyse du NAS ;
- La figure 3, représente un schéma des échanges entre commutateur d'accès ou de transit (CAS) de raccordement de l'opérateur et l'organe point de commande du service (PCS), déclenché sur "catégorie demandée";
- Les figures 4 à 9 représentent de façon schématique le déroulement chronologique de différents types d'appels décrits ci-après.

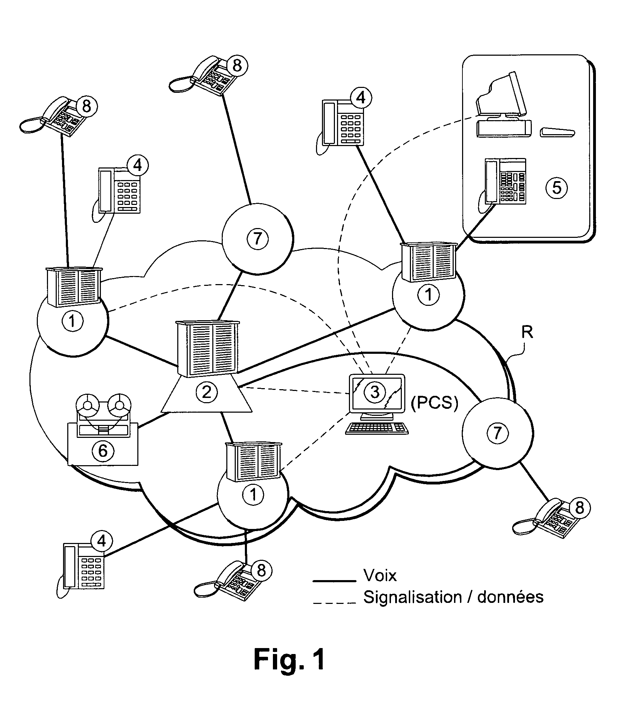

Le système qui va être détaillé dans la suite s'intègre dans tout réseau de télécommunication existant. Une intégration physique des éléments qui le constituent est illustrée par l'architecture illustrée sur la figure 1.

Le système illustré par le schéma de la figure 1 comprend des équipements du réseau R et des équipements du client c'est à dire ici du centre d'appels.
A) Les équipements du réseau R utiles à la mise en oeuvre de l'invention sont les suivants, (cf. figure 1) :
   - un ou plusieurs commutateur(s) d'accès 1. Il s'agit d'autocommutateurs qui intègrent une fonction de Commutateur d'Accès au Service « CAS » minimale de question-réponse.
      Un commutateur "CAS" possède une interface de commande permettant au PCS de commander la logique de traitement des appels. Une fonction minimale de question-réponse permet les opérations : InitialDP, Connect et Continue par exemple. Ces opérations sont des opérations de l'INAP CS1 normalisées à l'ITU (Q 1214-Q 1218) et à l'ETSI (ETS 300 374-1). De façon plus précise InitialDP est le message (on dit opération en INAP) de requête d'instruction, ie la « question » du client CAS vers le serveur PCS, Continue et Connect sont des réponses possibles du PCS vers le CAS, Continue ordonnant la poursuite normale du traitement d'appel et Connect un réacheminement de l'appel vers une destination dont l'adresse est fournie dans l'opération.
      Une implémentation plus complète de type "CS1" incluant le pilotage et le contrôle d'appel est préférable, mais non nécessaire. Dans le cas où seule, une fonction CAS restreinte est implémentée, le mécanisme CCBS en arrivée doit être supporté. Le mécanisme CCBS est le service de rappel sur occupation (« auto-rappel » en France) normalisé par l'ETSI.
      Dans un exemple de réseau existant tel que celui du Demandeur, le réseau téléphonique est le réseau de France Télécom, des commutateurs de type Alcatel E10 B3 et MT25 ou Ericsson AXE10 conviennent.
   - un ou plusieurs commutateur(s) de transit 2 intégrant une fonction CAS complète de niveau fonctionnel analogue au niveau CS1 et incluant le pilotage et le contrôle d'appel. Dans un exemple de réseau tel que celui du Demandeur, les commutateurs Alcatel MT20 et E10B3 conviennent ainsi qu'un AXE10 d'Ericsson utilisé en transit.
      Le niveau fonctionnel de fonction CAS est largement répandu ; on peut citer à titre d'exemple les produits suivant qui mettent fournissent ce niveau fonctionnel : Siemens EWSD, Lucent 5ESS, Nokia DX200, Nortel DMS100 et DMS GSP, Italtel, etc.
      En outre les commutateurs 1 de raccordement des équipements 4 du centre d'appel possèdent une fonction CAS qui comprend une base de données BA contenant l'identification des différents opérateurs (leur numéro personnel) et l'indication que ces derniers sont dans la catégorie opérateurs du centre d'appels virtuel.
   - un Point de Commande de Service 3, placé dans le réseau et dénommé ci-après « PCS ». Dans un exemple de réseau tel que celui du Demandeur, il s'agira typiquement du produit PCS RI2G (Réseau Intelligent de 2^{ième} Génération. Il s'agit d'un équipement de type ordinateur muni de moyens de traitement et de mémorisation. Selon l'invention le point de commande de service comprend une fonction de gestion de l'état de disponibilité des opérateurs de manière à transmettre les appels de service reçus vers les opérateurs disponibles pouvant donc répondre à ces appels. Cette fonction est réalisée au moyen d'une base de données contenant des informations temps réel sur l'état connecté ou non connecté des terminaux. Selon une autre caractéristique de l'invention, le point de commande de service comporte une file d'attente permettant de parquer les appels le temps que se libère un terminal du centre d'appel.
   - de façon optionnelle, un Périphérique Intelligent 6, placé dans le réseau et dénommé ci-après PI peut être prévu. Il offre la possibilité de diffuser des annonces personnalisées lors, par exemple, des parcages d'appels.
   - Enfin les commutateurs de raccordement des équipements 8 des usagers de ce service (personnes appelant le centre d'appel virtuel) ne nécessitent pas de fonction particulière et peuvent aussi bien supporter une fonction CAS (1) que pas comme c'est le cas pour le commutateur de raccordement 7.
B) Les équipements des clients de ce service c'est à dire les équipements du centre d'appel comportent :
   - Les postes opérateurs 4. Il s'agit de terminaux de télécommunication par exemple des téléphones analogiques ou numériques (RNIS) classiques.
   - Le standard du centre d'appels 5. Ce dernier intègre une console d'exploitation lui permettant de gérer les données de son centre d'appel ou de voir l'occupation de ses opérateurs et de remonter des observations. Il peut comporter en outre un standard classique, typiquement mais non nécessairement raccordé au réseau numérique RNIS.

Le service 'centre d'appels virtuel' peut assurer des services classiques : des services de type 800 (libre appel).

Selon l'invention, le système proposé comporte des éléments permettant d'assurer des services réseau de distribution automatique d'appels (ACD).

Il s'agit d'une distribution automatique des appels en fonction de l'état des lignes des opérateurs, des lois de préférence et la charge des opérateurs (en effet, le service centre d'appels virtuels a les moyens de connaître en temps réel l'état des lignes de tous les opérateurs du centre d'appel).

Selon l'invention, le système proposé comporte des éléments pour assurer des services de gestion.

Les éléments de gestion disponibles permettent ou incluent :
- Une grande souplesse de programmation des plages d'heures de travail des opérateurs pendant lesquelles des appels vers centre d'appel leurs sont acheminés sur leurs lignes personnelles et le temps de pause entre deux de ces appels. Cette programmation peut d'ailleurs être directement proposée par les opérateurs via téléphone ou Internet.
- Le pilotage et les contrôles des appels professionnels et privés des opérateurs pendant les plages horaires actives. Ce contrôle peut être plus ou moins strict en fonction de la politique de l'entreprise et du type d'appel (départ et arrivée) :
   - Interdiction pure et simple des appels personnels pendant les plages horaires actives
   - Filtrage des appels privés (en fonction des destinations/origines en passant par le standard).
   - Autorisation et simple pilotage des appels privés afin de connaître la disponibilité de la ligne de l'opérateur.

Ces fonctions de pilotage des appels autorisent une grande liberté notamment dans les modes de rémunération des opérateurs :
En fonction des heures actives
A l'appel traité
Au forfait, etc.

Tous ces éléments de services peuvent permettre d'avoir une gestion très personnalisée de chaque opérateur d'un centre d'appel.

Par exemple, on peut imaginer un ensemble (pool) d'opérateurs constituant le noyau dur du centre d'appel payés à l'heure de travail et ayant de fortes contraintes sur leur ligne (pas d'appel privé pendant les périodes de travail) complété par un pool d'opérateurs complémentaires payé à l'appel traité et pouvant librement avoir des appels privés pendant leurs périodes de travail.

Dans ce cas précis, la fonction de répartition des appels du centre d'appel (fonction qui est mise en oeuvre par un algorithme de répartition de charge et de disponibilité réelle des appels) ou ACD (Automatic Call Distribution), ira préférentiellement sonner les personnes disponibles du pool principal, et en cas de surcharge celles du pool complémentaire.

Selon une caractéristique de l'invention, le système proposé tient compte des différents types d'appels car il est capable de gérer des appels de service et des appels de personnels.

La description qui suit va permettre de comprendre le fonctionnement du système proposé.

### Fonctionnement dans le cas d'un appel de service à destination d'un opérateur :

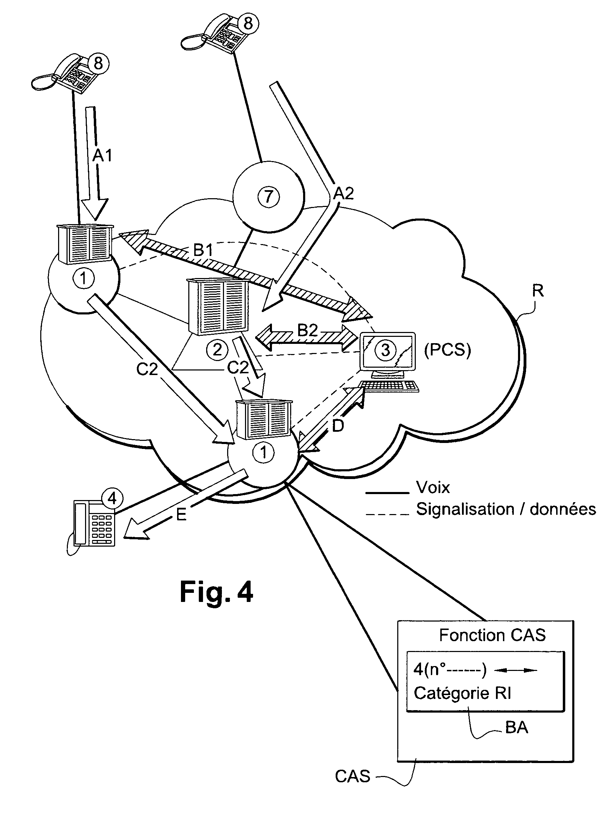

Le déroulement de cet appel est illustré par le schéma de la figure 4.

Un client 8 compose le Numéro d'Accès au Service "NAS" (c'est à dire le numéro d'appel du service) du centre d'appel virtuel.

Cet appel est acheminé selon les flèches A1 ou A2 (CAS transit 2 ou commutateur de rattachement du demandeur 1).

Dans tous les cas, le CAS (1 ou 2) doit être de niveau fonctionnel au moins équivalent au niveau CS1.
* Lorsque l'appel arrive au CAS 1 ou 2, alors :
   - sur analyse de la numérotation, le CAS se met en relation avec le PCS 3 'centre d'appels virtuels' (flèche B1 ou B2 selon le cas).

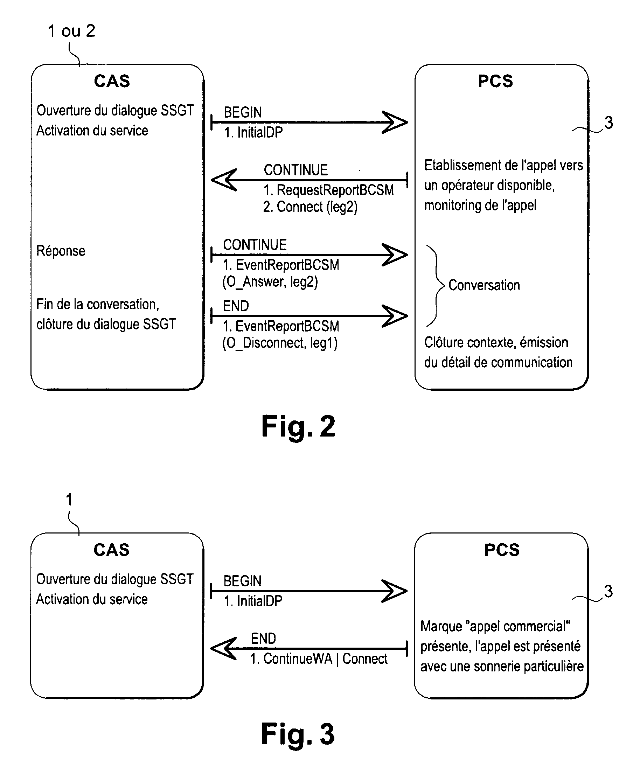

   Le PCS 3 connecte alors le demandeur à un des opérateurs disponibles 4 du centre d'appel qu'il a demandé, selon une règle de partage de charge prédéfinie et paramétrable précisée dans la suite.
   A cet instant, l'opérateur 4 destinataire est déclaré indisponible dans les bases de données temps réel du PCS 3.
   Lorsque aucun opérateur 4 n'est disponible, le demandeur 8 peut par exemple être parqué en file d'attente du PCS 3 jusqu'à ce qu'un opérateur soit de nouveau disponible pour traiter son appel.
   Les appels de service émis vers les opérateurs sont caractérisés par une marque « appel commercial ».
   Dans une réalisation particulière, cette marque peut par exemple être en réalité le NAS placé dans le numéro générique avec la qualification « numéro libre-appel demandé ».(dans le cas de l'utilisation de signalisation SSURN)
   Dans une réalisation particulière, ces appels sont pilotés par le PCS pour les événements O_Abandon, O_Called_Party_Busy, o_No_ANswer, O_Answer, o_Answer, Route_Select_Failure et O_Disconnect, ce qui permet de facturer l'appel et de faire des observations au PCS ainsi que de renvoyer l'appel vers un autre opérateur en cas d'occupation ou de non réponse du premier. Un exemple d'échange de message INAP entre CAS (1 ou 2) et PCS 3 correspondant à cette phase d'appel est fourni en figure 2.
* Lorsque l'appel est acheminé jusqu'au commutateur de raccordement 1 de l'opérateur 4 (flèche C1 ou C2 selon le cas), alors le commutateur 1 vérifie la catégorie de l'appel et sur reconnaissance de la catégorie arrivée « opérateur de centre d'appel virtuel » associée à la ligne demandée, le CAS de ce commutateur 1 d'arrivée se met en relation avec le PCS « centre d'appel virtuel » (flèche D).
   Le PCS 3 vérifie la présence de la marque 'appel commercial' dans le message d'établissement. Si cette marque est présente (ce qui est en l'occurrence le cas), il laisse l'appel se poursuivre (flèche E) mais le caractérise par une sonnerie particulière.
   Un exemple d'échange de messages INAP entre CAS et PCS correspondant à cette phase d'appel est fourni en figure 3.
   L'opérateur 4 traite l'appel.
   A la fin de la conversation, une temporisation de repos est armée ; lorsque cette temporisation expire, l'opérateur 4 est à nouveau déclaré disponible par le PCS 3 : de nouveaux appels de service peuvent lui être présentés.

### Fonctionnement dans le cas d'appels hors du service à destination d'un opérateur :

Il s'agit d'appels privés.

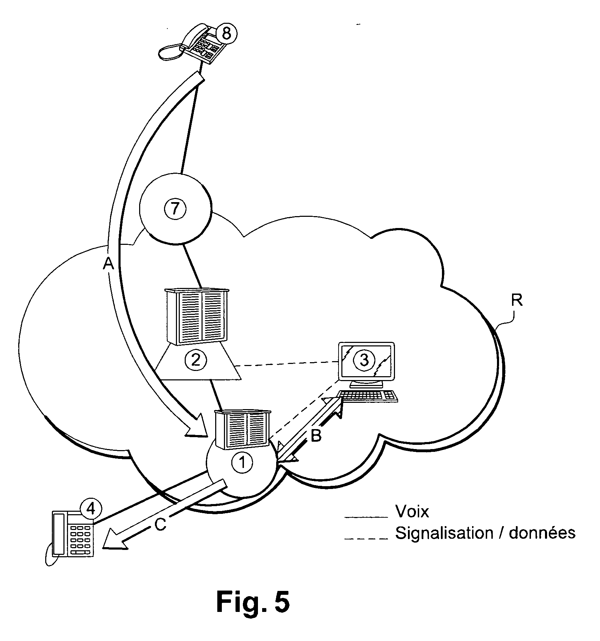

Le traitement de ces appels dépend de l'instant auquel ils arrivent à destination. En effet, en période de travail, ils peuvent être aiguillés vers un serveur afin de ne pas distraire l'opérateur.
* Cas d'appels présentés hors période de travail (illustré par la figure 5) :
   - L'appel est acheminé jusqu'au commutateur de raccordement 1 de l'opérateur 4 (flèche A). Sur reconnaissance de la catégorie arrivée « opérateur de centre d'appel virtuel » associée à la ligne demandée, le CAS du commutateur 1 d'arrivée déclenche vers le PCS 3 "centre d'appels virtuels" (flèche B).

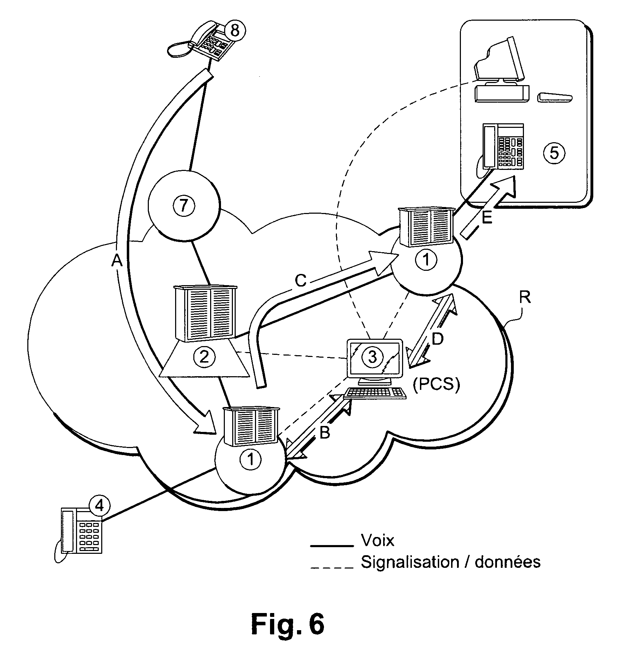

   L'appel étant hors périodes de travail de l'opérateur 4, le PCS 3 laisse l'appel se poursuivre de façon normale via une opération continue et clôt le dialogue CAS-PCS (via un message TCAP "END", TCAP étant la couche de protocole supportant INAP et normalisée par l'ITU dans les recommandations Q 771 et Q 775).
   L'appel est présenté à la destination finale avec une sonnerie standard.
* Cas d'appels présentés en période de travail (ce cas particulier d'appel renvoyé vers le standard est illustré : par la figure 6) :
   - L'appel est acheminé jusqu'au commutateur de raccordement 1 de l'opérateur 4 (flèche A) ; sur reconnaissance de la catégorie « opérateur de centre d'appel virtuel » associée à la ligne demandée, celui-ci se met en relation vers le PCS 3 (flèche B).

   Le PCS 3 après vérification, constate que l'appel a été présenté pendant une des périodes de travail de l'opérateur et que la marque « appel commercial » est absente du message d'établissement.
   Selon la règle prédéfinie (par la politique de l'entreprise) et enregistrée dans le système de gestion du PCS 3, ce dernier renvoie l'appel vers le standard 5 du centre d'appels; vers une annonce ou la messagerie de l'opérateur, ou encore laisse l'appel se poursuivre.
   Plusieurs options peuvent alors être paramétrées.
   - a) Dans le cas d'un appel renvoyé vers le standard :
      - L'appel est renvoyé vers le standard 5(flèche C) du centre d'appel via une opération "Connect" dans un message "END" en plaçant la marque « appel vers standard » dans l'appel sortant. Cette marque peut être semblable à celle des appels commerciaux mais possède par exemple un mot « digit » particulier supplémentaire (c'est-à-dire un chiffre ou un code clavier).
      - L'appel est acheminé jusqu'au CAS du commutateur de raccordement 1 du standard 5 du centre d'appels ; sur reconnaissance de la catégorie arrivée « standard de centre d'appel virtuel » associée à la ligne demandée, le CAS d'arrivée déclenche lui aussi vers le PCS 3 (flèche D) « centres d'appels virtuels »...
      - Le PCS 3 se contente de vérifier la présence de la marque « appel vers standard » dans le message d'établissement. Si cette marque est présente (ce qui est en l'occurrence le cas), il laisse l'appel se poursuivre (émission d'une opération continue dans un END).
      - L'appel est reçu par le standard 5 (flèche E). En cas d'urgence ; celui-ci pourra l'abouter vers l'opérateur.
   - b) l'appel est renvoyé vers messagerie ou annonce vocale.
      - Le demandeur est connecté à un serveur vocal qui lui signifie l'occupation de l'opérateur, la fin de sa période de travail et lui permet de laisser un message. Il existe de nombreuses solutions techniques différentes pour rendre ce service (renvoi vers messagerie personnelle, annonce vocale sur périphérique intelligent, etc...)
   - c) L'appel prolongé vers l'opérateur 4.

   Il existe deux solutions différentes selon que le CAS de raccordement 1 de l'opérateur 4 est de niveau CS1 ou de type question-réponse.
   Cas de niveau fonctionnel CS1 :
   - L'appel est piloté pour l'événement O_Disconnect afin de savoir quand l'opérateur redevient disponible pour lui retransmettre à nouveau les appels commerciaux.
      Si le CAS du commutateur de raccordement 1 est de type question-réponse « on utilise le mécanisme du service CCBS de l'ETSI » :
   - L'appel est prolongé via l'émission d'une opération continue dans un END. Un message "CCBSRequest" est ensuite envoyé par le PCS 3 au commutateur 1 de l'opérateur 4 afin d'être averti lorsque celle-ci devient de nouveau disponible (opération Remote UserFree) : il s'agit là de l'utilisation du service CCBS hors de son contexte habituel. On rappelle que le service CCBS est une fonction d'auto-rappel existant dans le réseau de télécommunication. Il s'agit d'un service normalisé par l'ETSI.

### Fonctionnement dans le cas d'un Appel d'un Opérateur (du service centre d'appel) :

* Cas d'un appel vers le standard 5 du centre d'appel virtuel :

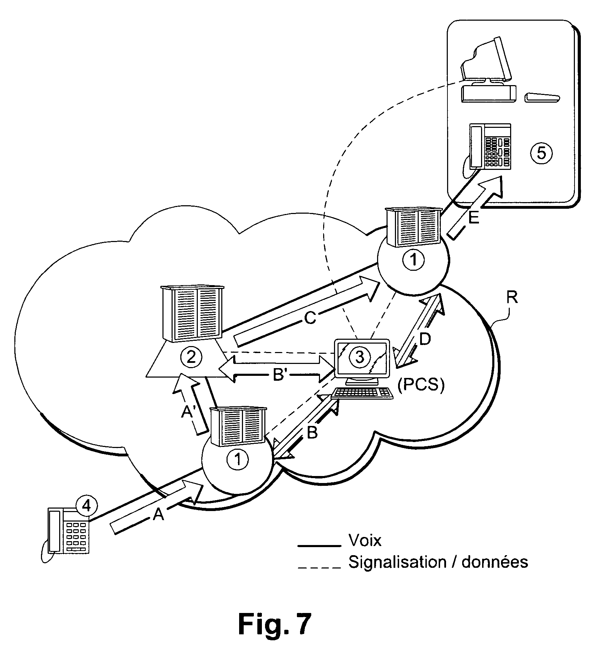

   La figure 7 illustre le cas où le commutateur de raccordement 1 de l'opérateur 4 est doté d'une fonction CAS question-réponse.

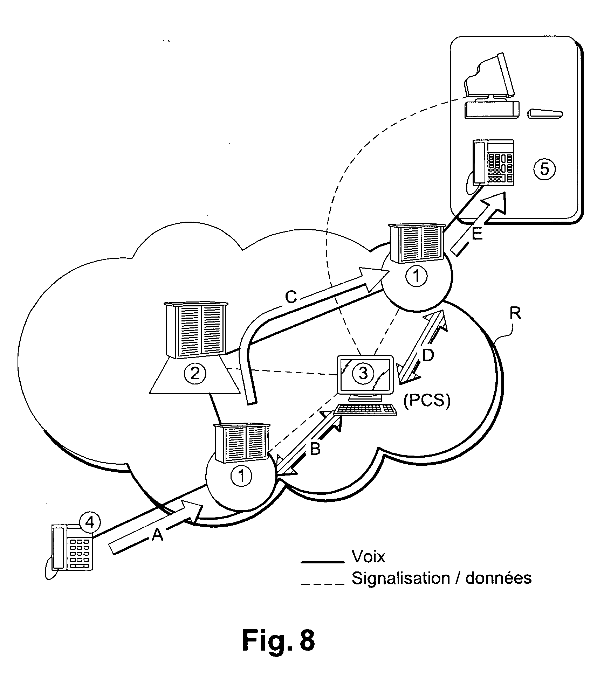

   La figure 8 illustre le cas où la fonction CAS du commutateur de raccordement 1 de l'opérateur 4 est de niveau CS1.
   Ces appels permettent à l'opérateur 4 de définir ses plages de travail, de connaître son avoir de revenus ou de contacter les services administratifs de son centre d'appel.
   - L'opérateur 4 compose le numéro court d'accès au standard via son commutateur de raccordement 1 (flèche A).
      a) Lorsque le CAS de départ est de type question-réponse (figure 7) :
         - Sur reconnaissance de la catégorie départ « opérateur de centre d'appel virtuel » associée à la ligne de l'appelant, le CAS de raccordement 1 de l'opérateur 4 se met en relation avec le PCS 3 (flèche B).
         - Reconnaissant le numéro du standard 5, le PCS 3 n'effectue aucun traitement particulier et laisse l'appel continuer via l'opération "Continue" émise dans un message "END".
         - L'analyse se poursuit, et l'appel est acheminé vers un CAS transit 2 de niveau fonctionnel CS1 (flèche A').
         - Sur reconnaissance du numéro composé (numéro court d'accès au standard 5, le CAS transit 2 déclenche vers le PCS 3 (Flèche B').
      b) Lorsque le CAS de départ est de niveau fonctionnel CSI (Figure 8) :
         - Sur reconnaissance de la catégorie départ « Opérateur de centre d'appel virtuel » associée à la ligne de l'appelant, et analyse du numéro composé, le CAS de raccordement 1 de l'opérateur 4 déclenche vers le PCS 3 (flèche B).

   Ensuite :
   - Si une sécurité est prévue, le PCS 3 demande à l'opérateur 4 de bien vouloir composer un code d'identification. Après réception et vérification de ce code, le PCS 3 permet la poursuite de l'appel via une opération "Connect" avec un paramètre calledPartyNumber contenant le numéro d'acheminement réel de la destination (qui est une traduction du numéro court composé) et la marque « Appel vers standard ».
      L'opérateur est déclaré indisponible dans les bases de données temps réel du PCS 3. L'appel est suivi par le PCS 3 afin de déterminer le moment où l'opérateur redevient disponible.
   - L'appel est acheminé jusqu'au CAS du commutateur de raccordement 3 du standard 5 du centre d'appel (Flèche C) ; sur reconnaissance de la catégorie arrivée « Standard de centre d'appel virtuel » associée à la ligne demandée, le CAS d'arrivée 1 déclenche lui aussi vers le PCS 3 « Centres d'appels virtuels » (Flèche D).
   - Le PCS 3 se contente de vérifier la présence de la marque « Appel vers standard » dans le message d'établissement. Si cette marque est présente (ce qui est en l'occurrence le cas), le PCS 3 laisse l'appel se poursuivre (émission d'une opération "Continue" et clôture du dialogue).
   - L'opérateur est par exemple connecté à un serveur vocal qui lui offre la possibilité de programmer ses prochains horaires de travail, de consulter la charge estimée du service dans des tranches données, de s'octroyer en plage de travail une pause de quelques minutes ou d'atteindre son servi ce administratif (la liste n'est pas exhaustive) (Flèche E).
* Cas d'un appel privé :
   - Ces appels sont des appels strictement privés. Ils peuvent avoir lieu pendant ou hors tranche de travail
   - L'opérateur 4 compose un numéro quelconque.
   - Sur reconnaissance de la catégorie départ « opérateur de centre d'appel virtuel » associée à la ligne de l'appelant, le CAS du commutateur 1 de raccordement de l'opérateur 4 se met en relation avec le PCS 3.
   - Le numéro demandé n'étant pas reconnu comme particulier par le PCS 3, celui-ci continue l'appel de deux façons suivant la nature du CAS de raccordement :
      a) Lorsque le CAS est de niveau fonctionnel CS1 :
         - La base de donnée temps réel de disponibilité des opérateurs dans le PCS 3 est mise à jour (opérateur indisponible). L'appel est piloté pour l'événement "O_Disconnect" afin de savoir quand l'opérateur redevient disponible pour lui retransmettre à nouveau des appels commerciaux.
      b) Si le CAS est de type question-réponse :
         - La base de donnée temps réel, de disponibilité des opérateurs dans le PCS 3 est mise à jour (opérateur indisponible). L'appel est prolongé via l'émission d'une opération continue dans un message "END". Un CCBSRequest est ensuite envoyé par le PCS au commutateur 1 de l'opérateur 4 afin d'être averti lorsque celle-ci devient de nouveau disponible ("opérationRemoteUserFree").

         Il est également possible de programmer dans le système de gestion du PCS 3, l'interdiction pure et simple des appels privés en période de travail sauf si le numéro demandé est un numéro d'urgence. (pompiers, SAMU, etc.)

### Fonctionnement dans le cas d'un appel du standard.

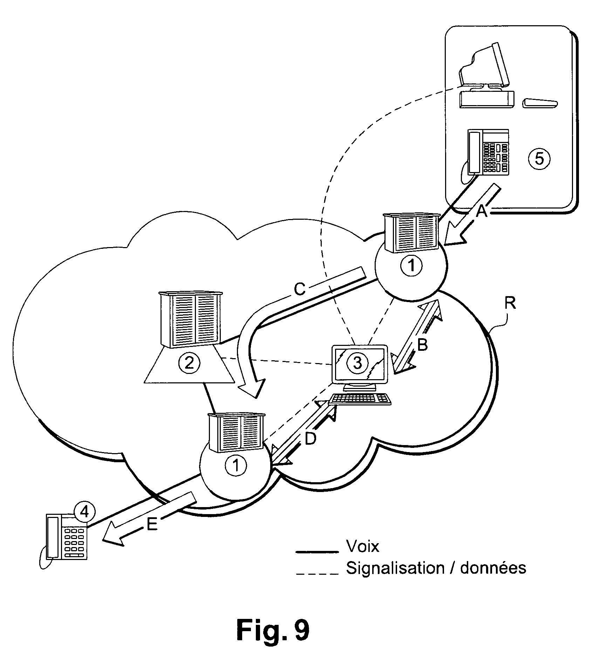

* Cas d'un appel vers un opérateur 4 (ce cas est illustré par la figure 9).
   Il s'agit d'appels administratifs ou d'aboutement d'appels privés interceptés vers un opérateur.
   - Un appel à destination d'un opérateur 4 émane du standard 5 du centre d'appels virtuel (flèche A).
   - Sur reconnaissance de la catégorie départ « Standard de centre d'appels virtuel » associée à la ligne de l'appelant, le CAS du commutateur de raccordement 1 du standard 5 déclenche vers le PCS 3 (flèche B).
   - Le numéro présent dans le paramètre "CalledPartyNumber" est celui d'un opérateur 4 ; le PCS 3 continue alors l'appel via une opération "Connect" dans un message "END" en plaçant la marque « appel commercial ».
   - L'appel est acheminé jusqu'au CAS de raccordement 1 de l'opérateur 4 (flèche C) ; sur reconnaissance de la catégorie "Arrivée Opérateur" de centre d'appel virtuel" associée à la ligne demandée, le CAS d'arrivée 1 se met en relation avec le PCS 3 (flèche D).
   - Le PCS 3 vérifie la présence de la marque "appel commercial" dans le message d'établissement. Si cette marque est présente (ce qui est le cas), il laisse l'appel se poursuivre mais le caractérise par une sonnerie particulière (flèche E).
* Pour d'autres appels :
   - Un appel émane du standard de centre d'appel.
   - Sur reconnaissance de la catégorie départ « Standard de centre d'appel virtuel » associée à la ligne de l'appelant, le CAS de raccordement du standard déclenche vers le PCS.
   - Le numéro présent dans le paramètre CalledPartyNumber n'étant pas celui d'un opérateur, le PCS continue l'appel via une opération continue dans un END.

La présente invention présente les avantages suivants :

L'utilisation de technique et de ressources réseau éprouvées et largement répandues (Réseau Téléphonique Commuté, Réseau Intelligent) permettant l'optimisation des investissements de l'opérateur téléphonique.

L'utilisation des raccordements et des terminaux existants des opérateurs de centres d'appels sans aucun investissement supplémentaire.

Une gestion évoluée de l'usage privé ou professionnel de la ligne de l'opérateur de centre d'appel.

Elle ne nécessite pratiquement pas d'investissement matériel de la part du client.

Ce service peut bénéficier de tous les compléments de service habituellement dévolus au service de type 800 (libre appel), à savoir renvois, mises en file d'attente, ACD (Automatic Call Distribution), etc... ou au contraire être vu comme un complément de service pour les services de renseignements ou du 800.

## Revendications

1. Système de télécommunication apte à fournir un service de type centre d'appels téléphoniques, ledit système étant relié à au moins un réseau téléphonique R équipé d'un ou plusieurs commutateurs d'accès (1) au réseau, d'un ou plusieurs commutateurs de transit (2) et d'au moins un point (3) de commande de service PCS, le système étant **caractérisé en ce qu'**il comprend :
- des équipements (4) téléphoniques non dédiés au service, constituant des équipements du centre d'appel virtuel, ces équipements étant des terminaux téléphoniques privés, chacun raccordé à un commutateur d'accès (1) au réseau de télécommunication ;
- le point de commande de service (3) relié à un ou plusieurs commutateurs dont au moins un est un commutateur de raccordement (1) des équipements téléphoniques du centre d'appels, ce point de commande (3) comprenant des moyens de gestion de l'état libre ou occupé des terminaux du centre d'appel virtuel et des moyens gestion des appels selon leur type à savoir selon qu'il s'agit d'appels de type service ou de type privé concernant ces équipements;
et **en ce que** les commutateurs de raccordement (1) des équipements du centre d'appels et un ou plusieurs commutateurs de transit (2) reliés à ces commutateurs sont équipés d'une fonction CAS d'accès au service centre d'appel, aptes à déclencher le point de commande (3) à l'arrivée d'un appel à destination d'un équipement du centre d'appels.

2. Système de télécommunication selon la revendication 1, **caractérisé en ce que** les moyens de gestion du point de commande de service (3) comportent une fonction de gestion de l'état de disponibilité des opérateurs de manière à transmettre les appels de service reçus vers les opérateurs disponibles pouvant donc répondre à ces appels, et **en ce que** cette fonction est réalisée au moyen d'une base de données contenant des informations temps réel sur l'état connecté ou non connecté des terminaux.

3. Système de télécommunication selon la revendication 1, **caractérisé en ce que** le point de commande de service (3) comporte une file d'attente permettant de parquer les appels le temps que se libère un terminal du centre d'appel.

4. Système de télécommunication selon l'une quelconque des revendications précédentes, **caractérisé en ce** les appels du service sont signalés après passage dans un commutateur équipés d'une fonction CAS, par une étiquette d'indication d'appels de service, et en ce que le point de commande de service (3) est apte à reconnaître cette étiquette et permettre l'acheminement de l'appel selon une règle de gestion prédéfinie.

5. Système de télécommunication selon la revendication 4, **caractérisé en ce** l'étiquette du message est constituée par le numéro d'appel de service (NAS) placée dans un numéro générique d'appel.

6. Point de commande de service pour la gestion des appels dans un centre téléphonique d'appels virtuel relié à au moins un réseau téléphonique équipé d'un ou plusieurs commutateurs d'accès et de transit, **caractérisé en ce qu'** il est relié à un ou plusieurs commutateurs (1, 2) du réseau téléphonique dont au moins un est un commutateur (1) de raccordement des équipements (4) du centre d'appels, et **en ce qu'**il comporte des moyens de gestion de l'état libre ou occupé des terminaux du centre d'appel virtuel et des moyens gestion des appels selon leur type à savoir selon qu'il s'agit d'appels de type service ou de type privé concernant ces équipements.

7. Point de commande de service selon la revendication 8, **caractérisé en ce que** les moyens de gestion comportent une unité de traitement reliée à au moins une mémoire de programme comportant un programme de gestion de l'état des terminaux et des appels de service et privés.

8. Procédé de gestion des appels pour un centre téléphonique virtuel dans lequel des opérateurs munis d'équipements de télécommunication sont susceptibles d'être appelés et selon lequel le centre virtuel est relié à au moins un réseau téléphonique R équipé d'un ou plusieurs commutateurs d'accès 1 au réseau et ou de raccordement des équipements, d'un ou plusieurs commutateurs de transit 2 et d'au moins un point de commande de service PCS, **caractérisé en ce qu'**il comprend :
Pour un appelant, la composition d'un numéro de service prédéfini (NAS) lorsqu'il s'agit d'un appel de service à destination du centre d'appel virtuel ou d'un numéro personnel d'un opérateur de ce centre lorsqu'il s'agit d'un appel privé,
Pour le réseau, l'acheminement de cet appel vers au moins le commutateur de raccordement d'un opérateur du centre d'appel ou vers le commutateur de raccordement de l'opérateur demandé, ces commutateurs étant munis d'une fonction d'accès au service centre d'appel (CAS),
Pour le commutateur de raccordement de l'opérateur ou d'accès ou de transit, le déclenchement du point de commande de service sur l'appel qu'il soit privé ou de service,
Pour le point de commande de service, la gestion de l'état libre ou occupé des terminaux du centre d'appel virtuel, la gestion de l'appel téléphonique reçu en fonction de règles prédéfinies selon son type à savoir selon qu'il s'agit d'un appel de type service ou de type privé.

9. Procédé de gestion des appels pour un centre d'appels téléphoniques virtuel selon la revendication 8, **caractérisé en ce qu'**il comprend pour le commutateur d'accès ou de transit ou de raccordement d'un opérateur libre vers lequel va être acheminé l'appel, le marquage de cet appel par une étiquette de service lorsqu'il s'agit d'un appel de service, l'opérateur étant appelé à partir de ces commutateurs par son numéro personnel.

10. Procédé de gestion des appels pour un centre d'appels téléphoniques virtuel selon la revendication 8 ou 9, **caractérisé en ce qu'**il comprend pour le point de commande :
- la vérification de la présence d'une indication d'appel de service,
lorsque cette indication est présente:
la détermination d'un équipement libre du centre d'appel,
l'émission de l'appel vers cet équipement;
lorsque l'indication n'est pas présente, il s'agit d'un appel privé :
la mise en oeuvre d'une règle prédéterminée de gestion de l'appel pour transmettre ou non cet appel.
